# EUROPÄISCHE PATENTSCHRIFT

(11) **EP 0 989 045 B1**
(45) Veröffentlichungstag und Bekanntmachung des Hinweises auf die Patenterteilung: **09.05.2001**
(21) Anmeldenummer: 99114315.7
(22) Anmeldetag: 21.07.1999
(51) Int. Cl.: B62D 1/06

(54) **Lenkrad für ein Kraftfahrzeug und Verfahren zur Herstellung eines Lenkradkranzes**
Steering wheel for a motor vehicle and method for manufacturing a steering wheel rim
Volant pour véhicule à moteur et procédé de fabrication d'une jante de volant

(30) Priorität: 25.08.1998 DE 19838452
(43) Veröffentlichungstag der Anmeldung: 29.03.2000
(73) Patentinhaber: DaimlerChrysler AG, 70567 Stuttgart (DE); TRW Automotive Safety Systems GmbH, 63743 Aschaffenburg (DE)
(72) Erfinder: Kerner, Wolfgang, 72184 Eutingen (DE); Link, Manfred, 71334 Waiblingen (DE); Nowak, Claudia, 72644 Oberboihingen (DE); Patzelt, Helmut, 71394 Kernen (DE)

(56) Entgegenhaltungen:
- DE-A- 2 164 976
- DE-A- 3 713 450
- US-A- 3 398 601
- PATENT ABSTRACTS OF JAPAN vol. 11, no. 348 (M-642), 14. November 1987 (1987-11-14) -& JP 62 128879 A (TOYODA GOSEI), 11. Juni 1987 (1987-06-11)
- PATENT ABSTRACTS OF JAPAN vol. 11, no. 269 (M-621), 2. September 1987 (1987-09-02) -& JP 62 071755 A (TOYODA GOSEI), 2. April 1987 (1987-04-02)

## Beschreibung

Die Erfindung betrifft ein Lenkrad für ein Kraftfahrzeug mit einem Lenkradkranz, der mittels eines Trägergebildes, insbesondere einer Speichenanordnung, mit einer Lenkradnabe verbunden ist, wobei der Lenkradkranz wenigstens abschnittsweise mit wenigstens einem Hohlraum versehen ist, der durch wenigstens eine Belüftungsöffnung zu einem Griffbereich des Lenkradkranzes hin offen ist.

Es ist bekannt (DE 37 13 450 A1), ein Lenkrad eines Kraftfahrzeugs durch Beheizung oder Kühlung zu temperieren. Dazu ist ein Lenkradkranz Teil eines trichterartigen Trägergebildes, wobei Trägergebilde einschließlich Lenkradkranz durchgängig hohl gestaltet sind. Der Mantel des Lenkradkranzes ist umlaufend mit Austrittsöffnungen für entsprechend temperierte Luft versehen. Dem Lenkrad ist ein relativ aufwendiger Kreislauf für das Temperiermedium zugeordnet.

Ein ähnliches Lenkrad für ein Kraftfahrzeug ist aus der DT 21 64 976 bekannt. Ein Lenkradkranz ist mit einem umlaufenden Ringkanal versehen, der auf Höhe von zwei Speichen mit durch die Speichen verlaufenden Zuführkanälen verbunden ist. Die Zuführkanäle sind in ein Mantelrohr geführt, wobei das Mantelrohr über entsprechende Anschlußleitungen mit aus dem Motorraum entnommener Warmluft oder mit vom Fahrtwind abgezweigter und über einen Ventilator angesaugter Frischluft versorgbar ist.

Ein Lenkrad mit den Merkmalen des Oberbegriffs des Anspruchs 1 ist in der JP-A-62 128 879 offenbart.

Aufgabe der Erfindung ist es, ein Lenkrad der eingangs genannten Art zu schaffen, bei dem mit einfachen Mitteln eine Temperierung des Lenkradkranzes ermöglicht wird.

Diese Aufgabe wird dadurch gelöst, daß der Lenkradkranz im Bereich des wenigstens einen Hohlraumes eine Aufnahme für die Festlegung des Lüftermodules aufweist. Die Erfindung geht von der Erkenntnis aus, daß bekannte Lösungen der Luftkanalführung vom Mantelrohrbereich zu dem Lenkradkranz aufgrund von bei heutigen Fahrzeugen vorhandenen Airbageinheiten im Lenkradkorpus keinen ausreichenden Bauraum für eine funktionsgerechte, praktische Verlegung zur Verfügung haben. Durch die direkte Festlegung des Lüftermoduls am Lenkradkranz entfallen Luftführungskanäle, da das Lüftermodul direkt Umgebungsluft ansaugt und in den wenigstens einen Hohlraum leitet. Die Ansaugung von Umgebungsluft erfolgt dabei in unmittelbarer Nähe des Lenkradkranzes. Die Kühlwirkung einer entsprechenden Belüftung stellt sich durch die allmählich erfolgende Umwälzung der Luft im Fahrzeuginnenraum ein, wobei aufgrund der entstehenden Strömungsverhältnisse neben der in unmittelbarer Nähe des Lenkradkranzes befindlichen Umgebungsluft allmählich auch kältere Luft aus dem Mantelrohr- und Fußraumbereich des Fahrzeuginnenraumes angesaugt wird. Die erfindungsgemäße Lösung gleicht die Nachteile einer verschlechterten Kaltluftzuführung in der Anfangsphase der Belüftung dadurch aus, daß sich aufgrund des Fehlens von Luftführungskanälen die Strömungswiderstände des Luftstromes erheblich verringern. Der Lenkradkranz kann entweder mit einem durchgehenden, umlaufenden Hohlraum oder aber mit abschnittsweise über den Umfang des Lenkradkranzes verteilten Hohlräumen versehen sein. Die wenigstens eine Belüftungsöffnung dient als Ausströmöffnung für durch das Lüftermodul zugeführte Luft und kann unterschiedliche Durchtrittsgeometrien aufweisen. Es kann entweder ein einzelner Ausströmschlitz vorgesehen sein oder vorzugsweise eine Vielzahl von unregelmäßig verteilten Ausströmlöchern. Die Belüftungsöffnungen sind vorzugsweise lediglich in Griffbereichen des Lenkradkranzes angeordnet, wobei die Griffbereiche Bereiche darstellen, an denen ein Fahrer üblicherweise das Lenkrad ergreift.

In Ausgestaltung der Erfindung ist der Lenkradkranz als selbsttragender Hohlkörperaufbau gestaltet. Der vorzugsweise ringförmige Hohlkörperaufbau ist derart ausgeführt, daß der Hohlkörperaufbau selbst bereits eine ausreichende Steifigkeit und Festigkeit aufweist. Drahteinlagen oder Streben, wie diese beim Stand der Technik im Lenkradkranz vorhanden sind, werden vermieden, um bei einem durchgehenden Hohlraum innerhalb des Lenkradkranzes gute Strömungsverhältnisse zu erzielen.

In weiterer Ausgestaltung der Erfindung ist das Lüftermodul auf Höhe einer Lenkradspeiche der Speichenanordnung in einem Ansatzbereich des Lenkradkranzes angeordnet. Dies ist eine besonders vorteilhafte Anordnung, da das Lüftermodul platzsparend im ohnehin benötigten Ansatzbereich des Lenkradkranzes an die Speichenanordnung integrierbar ist. Das Lüftermodul weist vorzugsweise einen kleinen Ventilator auf, der in einer rohrförmigen Hülse integriert ist, die an einem Stirnende einen in den Hohlraum mündenden Austritt sowie in Strömungsrichtung gegenüberliegend am anderen Stirnende einen als Ansaugstutzen gestalteten Eintritt aufweist. Das Lüftermodul kann in einfacher Weise als zylindrischer Rohrabschnitt gestaltet sein, in dem der Lüfter mit koaxial zur Mittellängsachse des Rohres ausgerichteter Drehachse integriert ist. Der stutzenförmige Rohrabschnitt ist relativ kurz gestaltet und mit einem Stirnende in der Aufnahme des Lenkradkranzes eingebettet oder in anderer Weise an diesem angeflanscht.

In weiterer Ausgestaltung der Erfindung ist der Lenkradkranz aus wenigstens einer Blechplatine ein- oder mehrschalig hergestellt. Die Gestaltung des Lenkradkranzes aus wenigstens einer Blechplatine ermöglicht die Einbringung der Belüftungsöffnungen, ohne daß dadurch Kerbwirkungen entstehen, die zu Materialschwächungen führen. Der Einsatz von Metallgußteilen ist aus diesem Grund nicht ohne weiteres möglich. Beim Einsatz von Blechplatinen können Biegebelastungen aufgenommen werden, ohne daß ein Versagen des Metallbleches auftritt. Vorzugsweise ist der Lenkradkranz aus zwei Blechhalbschalen zusammengefügt. Er kann jedoch auch einschalig oder aus drei oder mehr Schalen aufgebaut sein.

In weiterer Ausgestaltung der Erfindung ist der Lenkradkranz durch zwei miteinander verbundene Halbschalen gebildet, wobei eine untere mit dem Trägergebilde verbunden und eine obere mit den Belüftungsöffnungen versehen ist. Diese Ausgestaltung ermöglicht eine einfache und kostengünstige Herstellung. Falls die obere Halbschale mit dem Trägergebilde, insbesondere der Speichenanordnung, zu verbinden wäre, so würde sich dadurch ein erheblich vergrößerter fertigungstechnischer Aufwand ergeben. Die Speichenanordnung kann in an sich bekannter Weise aus mehreren Speichen bestehen, wobei vorzugsweise zwischen zwei und vier Speichen vorgesehen sind. Da die Speichen im Gegensatz zum Stand der Technik mit dem Belüftungssystem nichts zu tun haben, ist die Anordnung und Anzahl der Speichen abhängig von anderen Anforderungen wie Stabilität oder stilistischen Vorgaben frei wählbar.

In weiterer Ausgestaltung der Erfindung ist die obere Halbschale als Kunststoffspritzgußteil gestaltet. Die Verbindung zwischen der oberen Halbschale und einer als Blechteil gestalteten unteren Halbschale kann vorzugsweise durch eine Rast- oder Krimpverbindung erfolgen. Weiterhin sind die beiden Halbschalen formschlüssig mechanisch miteinander zu verbinden. Als formschlüssige mechanische Verbindungen sind Rast- oder Krimpverbindungen besonders vorteilhaft, da hierzu keine separaten Verbindungselemente benötigt werden.

In weiterer Ausgestaltung der Erfindung sind die beiden Halbschalen stoffschlüssig miteinander verbunden. Hier eignen sich insbesondere Verschweißungen, Verlötungen oder Verklebungen, wobei eine entsprechende Verschweißung über eine umlaufende Schweißnaht oder auch über Schweißpunkte erfolgen kann.

In weiterer Ausgestaltung der Erfindung ist der Lenkradkranz durch eine einstückige Blechplatine geformt, wobei eine Fügelinie am Außenumfang des Lenkradkranzes vorgesehen ist. Die Herstellung des Lenkradkranzes aus einer einstückigen Blechplatine erfolgt durch ein Rollbiegeverfahren über zwei Achsen, wodurch das gewünschte, rohrförmige Gebilde entsteht. Die Fügelinie der aneinanderliegenden Längskanten der Blechplatine nach der Rollbiegung ist am Außenumfang des Lenkradkranzes vorgesehen. Verletzungsgefahren durch einen Kopfaufprall des Fahrers werden dadurch reduziert. Bei einer Fügelinie auf der dem Fahrer zugewandten Vorderseite des Lenkradkranzes würde sich eine erheblich höhere Verletzungsgefahr ergeben, falls die Längskanten sich durch entsprechende Beschädigung des Lenkradkranzes aufstellen und scharfe Schnittkanten bieten würden. Auch bei der Gestaltung des Lenkradkranzes aus zwei Halbschalen sind die Fügebereiche jeweils am Außen- und am Innenumfang des Lenkradkranzes vorgesehen, so daß auch bei einer solchen Ausgestaltung Verletzungsgefahren im Hinblick auf einen Kopfaufprall reduziert werden.

Die Erfindung betrifft auch ein Verfahren zur Herstellung eines Lenkradkranzes für ein Lenkrad eines Kraftfahrzeugs, der mit Belüftungsöffnungen versehen ist und durch einen Hohlkörper gebildet wird. Aus der US 3,398,601 A1 ist ein solches Verfahren bekannt, bei dem der Lenkradkranz durch eine einstückige Blechplatine geschaffen wird, in die zunächst im ebenen Zustand die Belüftungsöffnungen eingestanzt werden und die anschließend durch Rollbiegen über zwei Achsen in einem rohrförmigen Gebilde umgeformt und schließlich an dem gebildeten Fügespalt verschweißt wird. Aufgabe der Erfindung ist es somit auch, ein solches Verfahren zu schaffen, das eine einfache und stabile Herstellung eines belüftbaren Lenkradkranzes ermöglicht.

Diese Aufgabe wird dadurch gelöst, daß der Lenkradkranz durch zwei zunächst ebene Blechplatinen geschaffen wird, wobei in wenigstens eine Blechplatine die Belüftungsöffnungen eingestanzt werden und anschließend beide Blechplatinen zu korrespondierenden Halbschalen umgeformt und schließlich miteinander verbunden werden. Die Einbringung der Belüftungsöffnungen in die ebene Blechplatine ermöglicht den Einsatz eines einfachen Stanzverfahrens. Würden die Belüftungsöffnungen erst in die bereits umgeformte Blechplatine eingebracht werden, so würde sich ein erheblich höherer Herstellungsaufwand ergeben.

Weitere Vorteile und Merkmale der Erfindung ergeben sich aus den Ansprüchen sowie aus der nachfolgenden Beschreibung von bevorzugten Ausführungsbeispielen der Erfindung, die anhand der Zeichnungen dargestellt sind.
- Fig. 1: zeigt einen Schnitt durch einen Teil einer Ausführungsform eines erfindungsgemäßen Lenkrades,
- Fig. 2: einen Schnitt ähnlich Fig. 1 durch eine weitere Ausführungsform eines erfindungsgemäßen Lenkrades, und
- Fig. 3: eine dritte Ausführungsform eines erfindungsgemäßen Lenkrades in einer Schnittdarstellung ähnlich den Fig. 1 und 2.

Ein Lenkrad 1 ist für den Einsatz in einem Personenkraftwagen vorgesehen und weist eine Lenkradnabe 2 auf, mittels derer das Lenkrad 1 in an sich bekannter Weise an einer Lenkspindel einer Lenkungsanordnung für den Personenkraftwagen festlegbar ist. Das Lenkrad 1 weist zudem einen Lenkradkranz 4 auf, der als geschlossener Ring gestaltet ist und über ein Trägergebilde in Form einer Speichenanordnung 3 mit der Lenkradnabe 2 verbunden ist. Der Lenkradkranz 4 ist als selbsttragender Hohlkörperaufbau gestaltet und weist in seinem Inneren einen ringförmig umlaufenden Hohlraum auf.

Es ist auch möglich, den Lenkradkranz 4 lediglich abschnittsweise über seinen Umfang verteilt auf Höhe von üblichen Griffbereichen des Lenkradkranzes 4 mit Hohlkammern zu versehen, denen jeweils ein Lüftermodul zugeordnet ist. Falls somit mehrere Hohlräume innerhalb des Lenkradkranzes 4 vorgesehen sind, die nicht miteinander strömungstechnisch verbunden sind, jedoch jeweils Abströmöffnungen aufweisen, so ist jedem dieser Hohlräume ein eigenes Lüftermodul zugeordnet.

Die Speichenanordnung wird in nicht näher dargestellter Weise durch mehrere Speichen 3 gebildet, die jeweils an der Lenkradnabe 2 festgelegt sind und sich schräg nach außen und nach oben erstrecken. Anstelle einer Speichenanordnung kann als Trägergebilde auch ein Trägertopf vorgesehen sein.

Der Lenkradkranz 4 ist aus einer unteren Halbschale 7 und einer oberen Halbschale 8 zusammengefügt, wobei die beiden Halbschalen 7, 8 einen selbsttragenden Hohlkörperaufbau definieren, der ohne weitere Versteifungen, Verstärkungen, Stützgerüste oder Stützkörper auskommt. Sowohl die untere Halbschale 7 als auch die obere Halbschale 8 sind jeweils aus einer Metallblechplatine, vorzugsweise einem Stahlblechteil, hergestellt.

Die Speichen 3 sind beim dargestellten Ausführungsbeispiel als Stahlspeichen gestaltet. In gleicher Weise können jedoch auch Leichtmetall-Gußspeichen vorgesehen sein, die durch teilweises Umgießen mit dem Lenkradkranz 4 verbunden sind.

Beide Halbschalen 7, 8 sind derart zusammengefügt, daß sie den Hohlraum 6 dicht umgrenzen. Die untere Halbschale 7 ist in einem Ansatzbereich 13 mit der jeweiligen Speiche 3 verschweißt oder in anderer Art und Weise fest verbunden. Auf Höhe der Speiche 3 ist der Lenkradkranz 4 mit einem stutzenartigen Aufnahmeflansch 11, 12 versehen, der durch zwei etwa radial zur Lenkachse nach innen ragende halbzylindrische Schalenabschnitte 11, 12 an den beiden Halbschalen 7, 8 gebildet wird. Die Schalenabschnitte 11, 12 sind durch entsprechendes Umformen der beiden Halbschalen 7, 8 gebildet und derart aufeinander abgestimmt, daß sie gemeinsam eine zylindrische Aufnahme ergeben. Die zylindrische Aufnahme der Schalenabschnitte 11, 12 dient zur Festlegung eines Lüftermodules 10, das aus einem Rohrstutzen 14 sowie einem innerhalb des Rohrstutzens 14 angeordneten Lüfter 15 zusammengesetzt ist. Der Lüfter 15 weist ein Schaufelrad auf, das mittels einer integrierten oder extern angeordneten Antriebseinheit antreibbar ist. Die Verlegung entsprechender Energieversorgungs- und Steuerleitungen zu dem Lüftermodul 10 ist nicht dargestellt. Anstelle von drahtgebundenen Leitungen können auch drahtlose Leitungen vorgesehen sein. Der Rohrstutzen 14 des Lüftermoduls 10 ragt vom Lenkradkranz 4 aus etwa radial nach innen ab. Der Lenkradkranz 4 einschließlich des Lüftermoduls 10 sind durch eine grundsätzlich bekannte Polsterung 5 ummantelt.

Sowohl die untere Halbschale 7 als auch die obere Halbschale 8 sind wenigstens auf Höhe von Griffbereichen des Lenkradkranzes 4 mit Abströmöffnungen 9 versehen. Bei einer Betätigung des Lüfters 15 des Lüftermoduls 10 wird Luft gemäß Pfeilrichtung vom Eintritt des Rohrstutzens 14 angesaugt und strömt in den Hohlraum 6 hinein. Vom Hohlraum 6 aus tritt die angesaugte Luft durch den entsprechenden Strömungsdruck durch die als Belüftungsöffnungen dienenden Abströmöffnungen 9 nach außen. Selbstverständlich ist auch die Polsterung 5 im Bereich der Abströmöffnungen 9 unterbrochen, so daß eine Belüftung und damit vorzugsweise eine Kühlung des Griffbereiches des Lenkradkranzes 4 erzielbar ist.

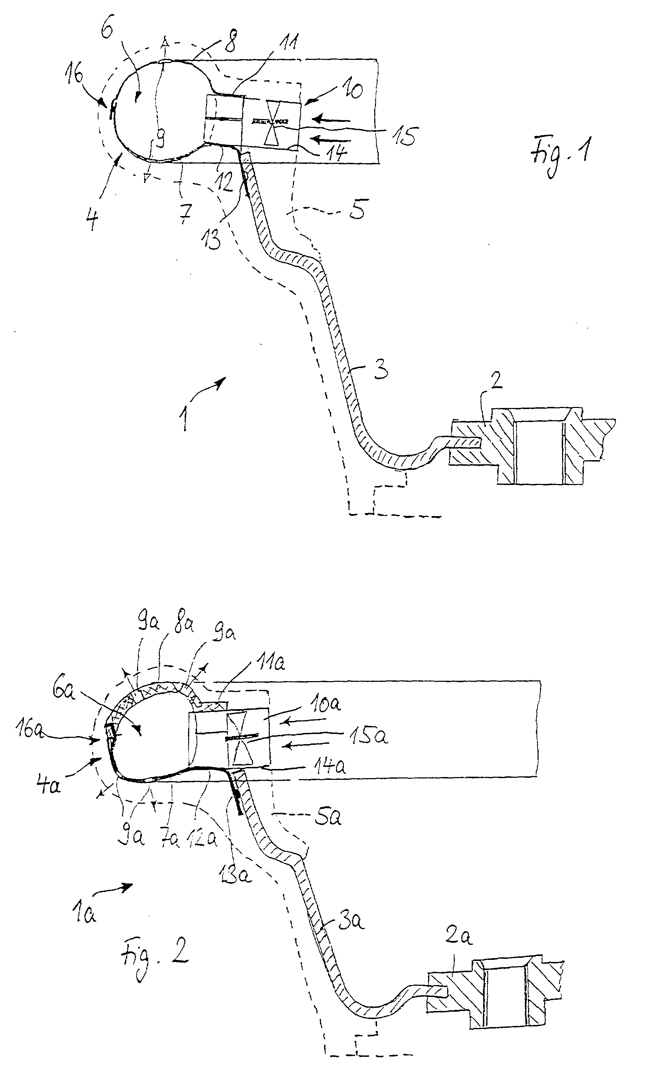

Zur Herstellung der beiden Halbschalen 7, 8 sind zunächst jeweils kreisringförmige und ebene Blechplatinen vorgesehen, in die im ebenen Zustand die entsprechenden Abströmöffnungen 9 eingestanzt werden. Die Abströmöffnungen 9 sind unregelmäßig über den Umfang des Lenkradkranzes 4 verteilt und insbesondere in den Griffbereichen des Lenkradkranzes 4 konzentriert. Nach dem Einstanzen der Abströmöffnungen 9 erfolgt bei beiden Halbschalen die jeweilige Umformung mittels geeigneter Stempelwerkzeuge zu der gewünschten Form. Dann werden die beiden Halbschalen 7, 8 aufeinandergefügt und sowohl im Bereich einer Verbindungsfuge 16 am Außenumfang des Lenkradkranzes 4 als auch im Bereich einer nicht näher bezeichneten, als Fügelinie dienenden Verbindungsfuge am Innenumfang des Lenkradkranzes 4 fest miteinander verbunden. Die Verbindung erfolgt beim dargestellten Ausführungsbeispiel gemäß Fig. 1 durch Ziehung einer umlaufenden Schweißnaht. In gleicher Weise kann die Verschweißung jedoch auch durch Punktschweißen erfolgen. Anstelle eines reinen Schweißvorganges zur Verbindung der beiden Halbschalen 7, 8 kann auch ein Krimp-Verfahren oder ein kombiniertes Krimp-/Schweißverfahren vorgesehen werden.

Ein Lenkrad la nach Fig. 2 entspricht vom grundsätzlichen Aufbau her dem Lenkrad 1 nach Fig. 1. Funktionsgleiche Abschnitte oder Teile des Lenkrades la sind daher mit den gleichen Bezugszeichen unter Hinzufügung des Buchstabens "a" versehen. Auch der Lenkradkranz 4a weist eine untere Halbschale 7a und eine obere Halbschale 8a auf, wobei zwar die untere Halbschale 7a aus einer Metallblechplatine, die obere Halbschale 8a hingegen als Kunststoffspritzgußteil gestaltet ist. Auch bei diesem Ausführungsbeispiel erfolgt die Verbindung des Lenkradkranzes 4a mit der Speichenanordnung 3a über entsprechende Verschweißung in Ansatzbereichen 13a der unteren Halbschale 7a. Die obere Halbschale 8a, die als Kunststoffspritzgußteil gestaltet ist, bildet in analoger Weise zum einen Abströmöffnungen 9a und zum anderen einen Schalenabschnitt lla zur Aufnahme des Lüftermodules 10a. Wesentlicher Unterschied zwischen den beiden Ausführungsbeispielen nach den Fig. 1 und 2 ist es darüber hinaus, daß die obere Halbschale 8a mit der unteren Halbschale 7a mechanisch formschlüssig sowohl im Bereich der äußeren als auch im Bereich der inneren Verbindungsfuge verbunden sind. Die Verbindung erfolgt sowohl im Bereich der äußeren Verbindungsfuge 16a als auch im Bereich der nicht dargestellten inneren Verbindungsfuge durch Rastverbindungen, die miteinander verklipst werden, durch kombinierte Rast/Krimp-Verbindungen oder durch reines Krimpen. Bei einer Verkrimpung, wie sie anhand der Fig. 2 dargestellt ist, sind in der oberen Halbschale 8a über den Umfang gleichmäßig verteilt eine Vielzahl entsprechender Durchtritte vorgesehen, durch die jeweils eine biegbare Blechlasche der unteren Halbschale 7a hindurchgesteckt und anschließend umgebogen wird. Falls alternativ oder ergänzend Rastverbindungen vorgesehen sind, so sind zweckmäßigerweise im Bereich der unteren Halbschale 7a entsprechende Rastaussparungen und im Bereich der oberen Halbschale 8a entsprechend elastisch nachgiebige Rasthaken und/oder Rastnasen vorgesehen.

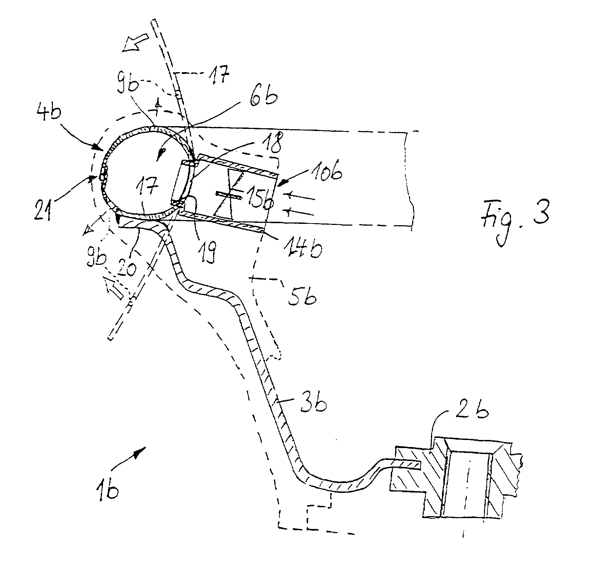

Auch bei dem Lenkrad 1b gemäß Fig. 3 sind funktionsgleiche Teile und Abschnitte mit den gleichen Bezugszeichen wie bei den Ausführungsbeispielen nach den Fig. 1 und 2, jedoch unter Hinzufügung des Buchstabens "b" versehen. Nachfolgend wird daher lediglich noch auf die Unterschiede des Lenkrades 1b nach Fig. 3 zu den vorhergehenden Ausführungsbeispielen nach den Fig. 1 und 2 eingegangen. Der Lenkradkranz 4b des Lenkrades 1b ist nicht aus zwei Halbschalen, sondern vielmehr einschalig gestaltet, indem er aus einer einstückigen Metallblechplatine 17, insbesondere einer Stahlblechplatine, hergestellt ist. Die Blechplatine 17 ist im Ausgangszustand eben und streifenförmig gestaltet und weist eine Breite auf, die etwa dem Umfang des Lenkradkranzes 4b entspricht. Im ebenen Zustand werden in die Blechplatine 17 an den entsprechenden Stellen die Abströmöffnungen 9b eingestanzt. Anschließend wird die Blechplatine 17 durch ein spezielles Umformverfahren, ein sogenanntes Rollbiegen, über zwei Achsen zu dem gewünschten rohrförmigen Gebilde gerollt. Anschließend werden die geschaffenen, gegenüberliegenden Stirnenden des rohrund ringförmigen Gebildes stumpf miteinander verschweißt. Im Bereich der Verbindungsfuge 21, die vorzugsweise am Außenumfang des Lenkradkranzes 4b gebildet ist, werden die entsprechenden Längskanten der Blechplatine 17 miteinander verschweißt und/oder verkrimpt. Die Umformung der Blechplatine 17 aus dem ebenen Zustand ist durch die gestrichelte Darstellung in Fig. 3 und die entsprechenden Pfeile angedeutet.

In gleicher Weise ist es möglich, mittels des Rollbiegeverfahrens den Lenkradkranz 4b aus einer kreisringförmigen, ebenen Blechplatine 17 herzustellen. Bei diesem Verfahren entfällt dann die stumpfe Verschweißung der Stirnenden des rohrförmigen Gebildes, da bereits durch die kreisringförmige Gestaltung der Blechplatine 17 die geschlossene Ringform erzielt wird.

Um die Anflanschung des Lüftermodules 10b zu ermöglichen, weist der Lenkradkranz 4b an seinem Innenumfang auf Höhe der entsprechenden Speiche 3b einen als Aufnahme dienenden Durchtritt 18 auf, der vorzugsweise kreisförmig gestaltet ist. Der Durchtritt 18 wird vorzugsweise durch Stanzen im ebenen Zustand der Blechplatine 17 erzielt. Der Rohrstutzen 14b des Lüftermoduls lOb ist mit einem Ringflansch 19 versehen, der umlaufend mit dem Rand des Durchtrittes 18 verschweißt ist. Der Rohrstutzen 14b und damit das Lüftermodul 10b können jedoch auch in anderer, geeigneter Weise lösbar oder unlösbar mit dem Lenkradkranz 4b verbunden sein.

Der Lenkradkranz 4b ist zur Verbindung mit der jeweiligen Speiche 3b nicht mit einem entsprechenden Ansatzbereich versehen, wie dies bei den Ausführungsbeispielen nach den Fig. 1 und 2 der Fall ist. Bei einem Ausführungsbeispiel nach Fig. 3 bildet vielmehr jede Speiche 3b einen Auflageabschnitt 20, auf dem der Lenkradkranz 4b sicher positionierbar ist. Der Auflagebereich 20 ist mit der Blechplatine 17 des Lenkradkranzes 4b verschweißt.

## Patentansprüche

1. Lenkrad (1, 1a, 1b) für ein Kraftfahrzeug mit einem Lenkradkranz (4, 4a, 4b), der mittels eines Trägergebildes, insbesondere einer Speichenanordnung (3, 3a, 3b), mit einer Lenkradnabe (2, 2a, 2b) verbunden ist, wobei der Lenkradkranz (4, 4a, 4b) wenigstens abschnittsweise mit wenigstens einem Hohlraum (6, 6a, 6b) versehen ist, der durch wenigstens eine Belüftungsöffnung (9, 9a, 9b) zu einem Griffbereich des Lenkradkranzes (4, 4a, 4b) hin offen ist, und wobei das Lenkrad (1, 1a, 1b) ein Luft aus der Umgebung des Lenkradkranzes (4, 4a, 4b) ansaugenden und in den Hohlraum (6, 6a, 6b) leitenden Lüftermodul (10, 10a, 10b) aufweist,
**dadurch gekennzeichnet**,
daß der Lenkradkranz (1, 1a, 1b) im Bereich des wenigstens einen Hohlraumes (6, 6a, 6b) eine Aufnahme (11, 12; 11a, 12a; 18) für die Festlegung des Lüftermodules (10, 10a, 10b) aufweist.

2. Lenkrad nach Anspruch 1,
**dadurch gekennzeichnet**,
daß der Lenkradkranz (4, 4a, 4b) als selbsttragender Hohlkörperaufbau gestaltet ist.

3. Lenkrad nach Anspruch 1 oder 2,
**dadurch gekennzeichnet**,
daß das Lüftermodul (10, 10a, 10b) auf Höhe einer Lenkradspeiche (3, 3a, 3b) der Speichenanordnung in einem Ansatzbereich des Lenkradkranzes (4, 4a, 4b) angeordnet ist.

4. Lenkrad nach Anspruch 1,
**dadurch gekennzeichnet**,
daß mehrere Belüftungsöffnungen (9, 9a, 9b) in jedem Griffbereich des Lenkradkranzes (4, 4a, 4b) konzentriert sind.

5. Lenkrad nach Anspruch 1 oder 2,
**dadurch gekennzeichnet**,
daß der Lenkradkranz (4, 4a, 4b) aus wenigstens einer Blechplatine ein- oder mehrschalig hergestellt ist.

6. Lenkrad nach Anspruch 5,
**dadurch gekennzeichnet**,
daß der Lenkradkranz (4, 4a) durch zwei miteinander verbundene Halbschalen (7, 8; 7a, 8a) gebildet ist, wobei eine untere Halbschale (7, 7a) mit dem Trägergebilde (3, 3a) verbunden und wenigstens eine obere Halbschale (8, 8a) mit den Belüftungsöffnungen (9, 9a) versehen ist.

7. Lenkrad nach Anspruch 6,
**dadurch gekennzeichnet,**
daß die obere Halbschale (8a) als Kunststoffspritzgußteil gestaltet ist.

8. Lenkrad nach Anspruch 6,
**dadurch gekennzeichnet**,
daß die beiden Halbschalen (7, 8; 7a, 8a) formschlüssig mechanisch miteinander verbunden sind.

9. Lenkrad nach Anspruch 6,
**dadurch gekennzeichnet**,
daß die beiden Halbschalen (7, 8; 7a, 8a) stoffschlüssig miteinander verbunden sind.

10. Lenkrad nach Anspruch 5,
**dadurch gekennzeichnet**,
daß der Lenkradkranz (4, 4a, 4b) durch eine einstückige Blechplatine (17) geformt ist, wobei eine Fügelinie (21) vorzugsweise am Außenumfang des Lenkradkranzes (4b) vorgesehen ist.

11. Lenkrad nach Anspruch 10,
**dadurch gekennzeichnet**,
daß die an der Fügelinie (21) benachbarten Längskanten der Blechplatine (17) umlaufend miteinander verschweißt sind.

12. Verfahren zur Herstellung eines Lenkradkranzes für ein Lenkrad eines Kraftfahrzeugs, der mit Belüftungsöffnungen versehen ist und durch einen Hohlkörper gebildet wird,
**dadurch gekennzeichnet**,
daß der Lenkradkranz (7, 8) durch zwei ebene Blechplatinen geschaffen wird, wobei zunächst in wenigstens eine Blechplatine die Belüftungsöffnungen (9) eingestanzt werden und anschließend beide Blechplatinen zu korrespondierenden Halbschalen (7, 8) umgeformt und schließlich miteinander verbunden werden.

## Claims

1. Steering wheel (1, 1a, 1b) for a motor vehicle having a steering wheel rim (4, 4a, 4b), which is connected by means of a bearing unit, in particular a spoke arrangement (3, 3a, 3b) to a steering wheel hub (2, 2a, 2b), the steering wheel rim (4, 4a, 4b) being provided at least intermittently with at least one cavity (6, 6a, 6b), opening via at least one venting orifice (9, 9a, 9b) towards a gripping region of the steering wheel rim (4, 4a, 4b) and the steering wheel (1, 1a, 1b) having a fan unit (10, 10a, 10b) sucking in air from the area around the steering wheel rim (4, 4a, 4b) and feeding it into the cavity (6, 6a, 6b).
**characterised in that**
the steering wheel rim (1, 1a, 1b) has a seat (11, 12; 11a, 12a; 18) for mounting the fan unit (10, 10a, 10b) in the region of the at least one cavity (6a, 6b, 6c).

2. Steering wheel as claimed in claim 1,
**characterised in that**
the steering wheel rim (4, 4a, 4b) is designed as an integral hollow body structure.

3. Steering wheel as claimed in claim 1 or 2,
**characterised in that**
the fan unit (10, 10a, 10b) is disposed on a level with a steering wheel spoke (3, 3a, 3b) of the spoke arrangement in a neck region of the steering wheel rim (4, 4a, 4b).

4. Steering wheel as claimed in claim 1,
**characterised in that**
several venting orifices (9, 9a, 9b) are concentrated in the gripping region of the steering wheel rim (4, 4a, 4b).

5. Steering wheel as claimed in claim 1 or 2,
**characterised in that**
the steering wheel rim (4, 4a, 4b) is made from at least one metal plate in a single or multi-shell design.

6. Steering wheel as claimed in claim 5,
**characterised in that**
the steering wheel rim (4, 4a) is formed by two half-shells (7, 8; 7a, 8a) joined to one another, a bottom half shell (7, 7a) being joined to the bearing unit (3, 3a) and at least a top half-shell (8, 8a) being provided with the venting orifices (9, 9a).

7. Steering wheel as claimed in claim 6,
**characterised in that**
the top half-shell (8a) is an injection moulded plastics part.

8. Steering wheel as claimed in claim 6,
**characterised in that**
the two half-shells (7, 8; 7a, 8a) are mechanically joined to one another in a form-fit arrangement.

9. Steering wheel as claimed in claim 6,
**characterised in that**
the two half-shells (7, 8; 7a, 8a) are joined to one another by a join in the material.

10. Steering wheel as claimed in claim 5,
**characterised in that**
the steering wheel rim (4, 4a, 4b) is moulded from an integral metal plate (17), a seam line (21) preferably being provided on the outer circumference of the steering wheel rim (4b).

11. Steering wheel as claimed in claim 10,
**characterised in that**
the longitudinal edges of the metal plate (17) along the seam line (21) are circumferentially welded to one another.

12. Method of manufacturing a steering wheel rim for a steering wheel of a motor vehicle, which is provided with venting orifices and is made from a hollow body,
**characterised in that**
the steering wheel rim (7, 8) is made from two flat metal plates, the venting orifices (9) being firstly punched in at least one metal plate, after which both metal plates are moulded into matching half-shells (7, 8) and then joined to one another.

## Revendications

1. Volant (1, 1a, 1b, ) pour un véhicule automobile, avec une jante de volant (4, 4a, 4b, ) reliée à un moyeu de volant (2a, 2b, ) au moyen d'une structure support, en particulier un agencement à rayons (3, 3a, 3b), la jante de volant (4, 4a, 4b) étant munie, au moins par sections, d'au moins un espace creux (6, 6a, 6b), ouvert vers une zone de saisie de la jante de volant (4, 4a, 4b), par au moins une ouverture de ventilation (9, 9a, 9b), et le volant (1, 1a, 1b) présentant un module à ventilateur (10, 10a, 10b), aspirant de l'air depuis l'environnement de la jante de volant (4, 4a, 4b) et le véhiculant dans l'espace creux (6, 6a, 6b), caractérisé en ce que la jante de volant (1, 1a, 1b) présente, dans la zone du au moins un espace creux (6, 6a, 6b), un logement (11, 12; 11a, 12a; 18) pour la fixation du module à ventilateur (10, 10a, 10b).

2. Volant selon la revendication 1, caractérisé en ce la jante de volant (4, 4a, 4b) est réalisée en structure à corps creux, autoporteuse.

3. Volant selon la revendication 1 ou 2, caractérisé en ce que le module à ventilateur (10, 10a, 10b) est disposé à hauteur d'un rayon de volant (3, 3a, 3b) de l'agencement à rayons, dans une zone formant appendice de la jante de volant (4, 4a, 4b).

4. Volant selon la revendication 1, caractérisé en ce que plusieurs ouvertures de ventilation (9, 9a, 9b) sont concentrées dans chaque zone de saisie de la jante de volant (4, 4a, 4b).

5. Volant selon la revendication 1 ou 2, caractérisé en ce que la jante de volant (4, 4a, 4b) est fabriquée en coques uniques ou multiples, à partir d'au moins une platine de tôle.

6. Volant selon la revendication 5, caractérisé en ce que la jante de volant (4, 4a) est constituée par deux demi-coques (7, 8 ; 7a, 8a) reliées ensemble, une demi-coque inférieure (7, 7a) étant reliée à la structure support (3, 3a) et au moins la demi-coque supérieure (8, 8a) est munie des ouvertures de ventilation (9, 9a).

7. Volant selon la revendication 6, caractérisé en ce que la demi-coque supérieure (8a) est réalisée sous la forme de pièce moulée par injection en matière plastique.

8. Volant selon la revendication 6, caractérisé en ce que les deux demi-coques (7, 8 ; 7a, 8a) sont reliées ensemble mécaniquement, par une liaison à ajustement de forme.

9. Volant selon la revendication 6, caractérisé en ce que les deux demi-coques (7, 8 ; 7a, 8a) sont reliées ensemble par une liaison par la matière.

10. Volant selon la revendication 5, caractérisé en ce que la couronne de volant (4, 4a, 4b) est formée par une platine en tôle (17) d'une seule pièce, une ligne de jointoiement (21) étant prévue, de préférence sur la périphérie extérieure de la jante de volant (4b).

11. Volant selon la revendication 10, caractérisé en ce que les arêtes longitudinales, voisines de la ligne de jointoiement (21), de la platine en tôle (17) sont soudées les unes aux autres sur le pourtour.

12. Procédé de fabrication d'une jante de volant pour un volant d'un véhicule automobile, muni d'ouvertures de ventilation et constitué par un corps creux, caractérisé en ce que la jante de volant (7, 8) est obtenue au moyen de deux platines en tôle planes, d'abord dans au moins une platine les ouvertures de ventilation (9) étant perforées par estampage et, ensuite, les deux platines étant reformée pour donner des demi-coques (7, 8) se correspondant et, enfin, étant reliées ensemble.
